# EUROPÄISCHE PATENTSCHRIFT

(11) **EP 0 525 614 B1**
(45) Veröffentlichungstag und Bekanntmachung des Hinweises auf die Patenterteilung: **12.02.1997**
(21) Anmeldenummer: 92112524.1
(22) Anmeldetag: 22.07.1992
(51) Int. Cl.: B29C 51/16

(54) **Verfahren zum Herstellen eines Kunststoffgefässes und so hergestelltes Kunststoffgefäss**
Process for producing plastic containers and plastic containers so produced
Procédé pour la fabrication de conteneurs en plastiques et conteneurs ainsi produits

(30) Priorität: 27.07.1991 DE 4124994
(43) Veröffentlichungstag der Anmeldung: 03.02.1993
(73) Patentinhaber: 4P Rube Göttingen GmbH, D-37022 Göttingen (DE)
(72) Erfinder: Zettner, Hans, W-3400 Göttingen (DE); Kutz, Herbert, W-3400 Göttingen (DE)
(74) Vertreter: Hutzelmann, Gerhard

(56) Entgegenhaltungen:
- EP-A- 0 052 021
- EP-A- 0 254 923
- DE-A- 2 034 154
- DE-U- 7 327 513
- FR-A- 1 515 445
- FR-A- 2 308 484
- US-A- 3 765 976

## Beschreibung

Die Erfindung bezieht sich auf ein Verfahren zum Herstellen eines im Tiefziehverfahren erzeugten Kunststoffgefäßes, mit einem Boden und Seitenwänden, von denen wenigstens die Seitenwände mit einem Aufdruck versehen werden sollen, wozu ein bedruckter Materialzuschnitt wie z.B. ein Etikett in die Tiefziehform eingelegt wird, der wenigstens die Seitenwände des Kunststoffgefäßes bedeckt, wobei der vor dem eigentlichen Tiefziehvorgang in die Form eingelegte Materialzuschnitt(Etikett) aus einem Kunststoff hergestellt ist, welcher beim Tiefziehen des Kunststoffgefäßes selbst eine innige Verbindung mit der Außenseite des Gefäßes eingeht.

Aus der EP-A-0 387 883 ist ein Verfahren bekannt, bei dem eine bedruckte Lage mit Hilfe einer Membran während des Tiefziehprozesses gegen die Innenseite der durchsichtigen Behälterwand gepreßt wird. Hierbei besteht der Behälter praktisch aus zwei geschlossenen Wänden, nämlich der Membran und der eigentlichen Behälterwand, zwischen welchen die bedruckte Lage eingeschlossen wird. Dieser Aufbau ist verhältnismäßig aufwendig und nur schwer störungsfrei herstellbar, da sich Lufteinschlüsse zwischen Membran und Behälterwand nicht vermeiden lassen.

Aus der EP-A-0 254 923 ist ein Kunststoffetikett bekannt, das im Coextrusionsverfahren hergestellt wird und eine Verbindungsschicht sowie eine zu bedruckende Schicht enthält. Zwischen diesen beiden Lagen soll dann eine Haftvermittler-Schicht angeordnet sein. Alle drei Lagen sind aus unterschiedlichen Materialien hergestellt, so daß eine gemeinsame Wiederverwertung nicht möglich ist.

Die US-A-3,765,976 beschreibt ein Verfahren zum Herstellen eines im Tiefziehverfahren erzeugten Kunststoffgefäßes, das eine Verstärkungslage aus beliebigem Material, wie z.B. Karton, Kunststoff oder Aluminium erhält.

Auch hierbei ist das komplette Gefaß nicht recycelbar; es muß vielmehr vorher in seine einzelnen Lagen aufgespalten werden.

Demgegenüber liegt der Erfindung die Aufgabe zugrunde, ein Verfahren der genannten Art aufzuzeigen, mit dem ein Kunststoffgefäß einfach und rationell hergestellt und nach seiner Verwendung als ganzes recycelt werden kann.

Diese Aufgabe wird erfindungsgemäß dadurch gelöst, daß der Materialzuschnitt (Etikett) aus dem gleichen Grundmaterial wie das Kunststoffgefäß hergestellt und zusammen mit diesem wiederverwertbar ist.

Der Materialzuschnitt wird fertig ausgestanzt in die Tiefziehform eingelegt und beim Tiefziehen des Gefäßes nicht umgeformt. Damit wird eine einwandfreie Bedruckung des fertigen Gefäßes erhalten. Aufgrund des erfindungsgemäßen Verfahrens braucht eine Trennung von Gefäß und Zuschnitt beim Recyceln nicht vorgenommen werden, da beide zusammen der Wiederverwertung zugeführt werden können.

Bei einer vorteilhaften Ausgestaltung der Erfindung ist vorgesehen, daß die Kunststoffolie von einer Rolle abgezogen und einer Vorheizstation zugeführt wird, worauf die Kunststoffolie in die eigentliche Formstation einläuft, in welcher Formnester vorgesehen sind, in welche die das jeweilige Etikett bildenden Materialzuschnitte vor dem Tiefziehen der Kunststoffolie eingelegt werden.

Ein erfindungsgemäßes Kunststoffgefäß mit einem Boden und Seitenwänden, das im Tiefziehverfahren aus einer Kunststoffolie hergestellt ist und bei dem wenigstens die Seitenwände mit einem Druckbild versehen sind, wozu wenigstens die Seitenwände des Gefäßes auf ihrer Außenseite mit einem Materialzuschnitt versehen sind, der beim Tiefziehen des Gefäßes mit dessen Außenseiten eine innige Verbindung eingeht, ist dadurch gekennzeichnet, daß der Materialzuschnitt (Etikett) an seiner Außenseite oder an seiner Innenseite ein Druckbild aufweist, und daß der Materialzuschnitt aus dem gleichen Grundmaterial hergestellt ist wie das Kunststoffgefäß.

Dadurch läßt sich das Gefäß und das Etikett problemlos miteinander wiederaufbereiten.

Bei einer besonders günstigen Ausgestaltung der Erfindung besteht der Materialzuschnitt (Etikett) aus einem Bodenabschnitt und daran angeformten Wandabschnitten, zwischen denen beim Hochfalten in der Tiefziehform wenigstens geringfügige Öffnungen verbleiben.

Durch diese Öffnungen kann dann Luft entweichen, so daß Lufteinschlüsse zwischen der Gefäßwand und dem Etikett ausgeschlossen sind.

In der Zeichnung ist die Erfindung anhand mehrerer Ausführungsbeispiele veranschaulicht. Dabei zeigen:
- Fig.1: eine schematische Darstellung eines Verfahrensablaufes zum Herstellen eines Kunststoffgefäßes im Tiefziehverfahren,
- Fig.2: eine schematische Darstellung in Seitenansicht einer Vorrichtung zum Herstellen eines tiefgezogenen Kunststoffgefäßes,
- Fig.3: eine schaubildliche Darstellung eines Kunststoffgefäßes mit auf der Außenseite angeordnetem Etikett,
- Fig.4: eine Ansicht eines flachliegenden Etiketts und
- Fig.5: ein weiteres Ausführungsbeispiel eines flachliegenden Etiketts.

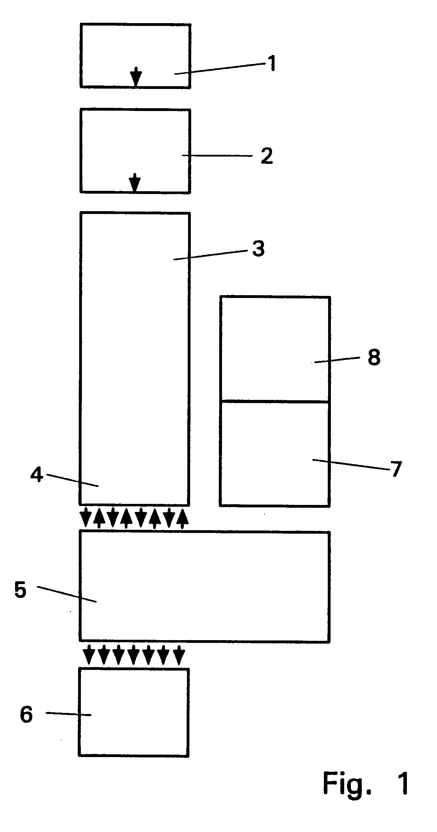

Bei dem in Fig.1 dargestellten Verfahrensablauf wird eine nicht dargestellte Kunststoffolie von einer Abrolleinrichtung 1 abgezogen und einer Vorheizung 2 zugeführt. Darauf folgt die eigentliche Heizung 3 im Einlaufbereich einer Tiefziehmaschine, an deren Ende die eigentliche Formstation 4 angeordnet ist. Dieser Formstation gegenüberliegend ist eine Eingabeeinrichtung 5 für Etiketten vorgesehen, mit welcher Etiketten in die einzelnen Tiefziehformen eingelegt werden. Im Anschluß daran ist eine Einrichtung 6 zum Sammeln und Ablegen der fertigen Kunststoffgefäße vorgesehen. Seitlich neben der Formstation 4 ist eine Mühle 7 angeordnet, in welcher die beim Tiefziehen verbleibenden Stanzgitter zermahlen und einer anschließenden Sammeleinrichtung 8 zugeführt werden.

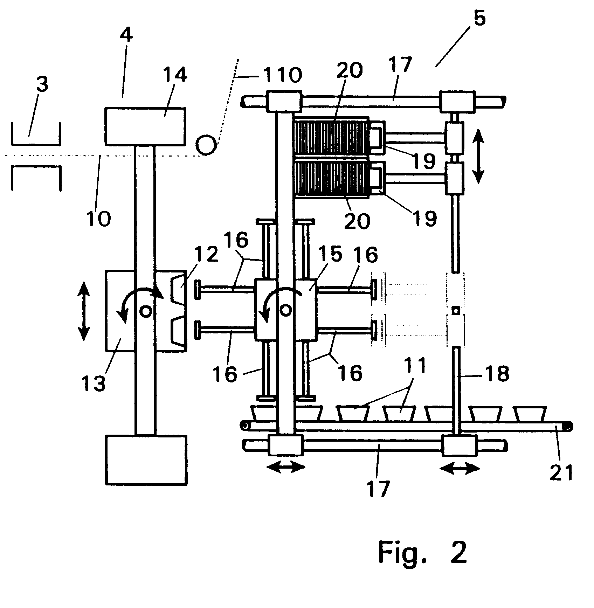

Die in Fig.2 dargestellte Vorrichtung zum Tiefziehen eines Kunststoffgefäßes 11 hat hinter der Heizung 3 eine zweiteilige Formstation 4, welche aus einem die Formnester 12 aufweisenden Unterteil 13 und einem Oberteil 14 besteht. Auf der von der Heizung 3 abgewandten Seite der Formstation 4 ist die Eingabeeinrichtung 5 für die Etiketten angeordnet, die im wesentlichen aus einem Drehkreuz 15 mit acht in einer Vertikalebene liegenden Armen 16 besteht, das zusätzlich auf zwei Längstraversen 17 in Längsrichtung verfahrbar gelagert ist. In Querrichtung der Vorrichtung können mehrere solcher Arme angeordnet sein, was natürlich eine entsprechende Anzahl von Formnestern 12 bedingt. Ebenfalls auf diesen Längstraversen 17 ist ein Querträger 18 längsverschiebbar gelagert, der seinerseits zwei höhenverstellbare Sauger 19 trägt, welche Etiketten aus zwei parallelen, übereinander angeordneten Magazinen 20 abzunehmen und zwei Armen 16 zuzuführen vermögen. Die Anzahl von Magazinen in Querrichtung ist dabei wieder an die Anzahl der Formnester 12 bzw. der Arme 16 angepaßt. Unterhalb des Drehkreuzes 15, bzw. der nach unten stehenden Arme 16 ist ein Förderband 21 angeordnet, auf welchem die Gefäße 11 abgelegt werden können.

In ihrer oberen Stellung werden die beiden Sauger 19 gegen die beiden Magazine 20 gefahren und entnehmen aus diesen jeweils ein Etikett. Daraufhin verfahren die beiden Sauger nach unten, bis sie den beiden ihnen zugewandten Armen 16 des Drehkreuzes 15 gegenüberstehen und die Etiketten an diese übergeben können. Während das Drehkreuz um 90° entgegen dem Uhrzeigersinn gedreht wird, fahren die Sauger 19 wieder nach oben und holen das nächste Paar Etiketten ab, das dann an die nächsten beiden Arme 16 übergeben wird. Die Arme 16 führen auch diese Etiketten in die Formnester 12 des Unterteils 13 ein, worauf das Unterteil um 90° entgegen dem Uhrzeigersinn gedreht und dann nach oben gegen das Oberteil 14 gefahren wird, wobei die Kunststoffolie 10 zwischen beiden eigespannt und zu becherförmigen Gefäßen verformt wird. Bei diesem Verformen legt sich die Kunststoffolie mit ihrer Außenseite an das jeweilige Etikett an und verbindet sich aufgrund des Tiefziehdruckes und der Erwärmung der Folie innig mit diesem. Gleichzeitig wird das becherförmige Gefäß aus der Folie herausgestanzt so daß nur noch ein Stanzgitter 110 verbleibt, das zwischen der Formstation 4 und der Eingabeeinrichtung 5 für die Etiketten nach oben weggeführt wird. Das Unterteil 13 fährt dann wieder nach unten und wird um 90° im Uhrzeigersinn geschwenkt, so daß es wieder seine Ausgangsposition einnimmt. Nun können die Arme 16 in die Formnester 12 einfahren und die fertigen Gefäße entnehmen. Beim Weiterdrehen des Drehkreuzes 15 gelangen die Gefäße 11 in eine über dem Förderband liegende Position, aus welcher sie auf das Förderband 21 übergeben werden. Gleichzeitig wurden mit Etiketten bestückte Arme 16 den leeren Formnestern gegenübergestellt, so daß das Einlegen der Etiketten durch Einfahren der Arme 16 in diese wieder beginnen kann.

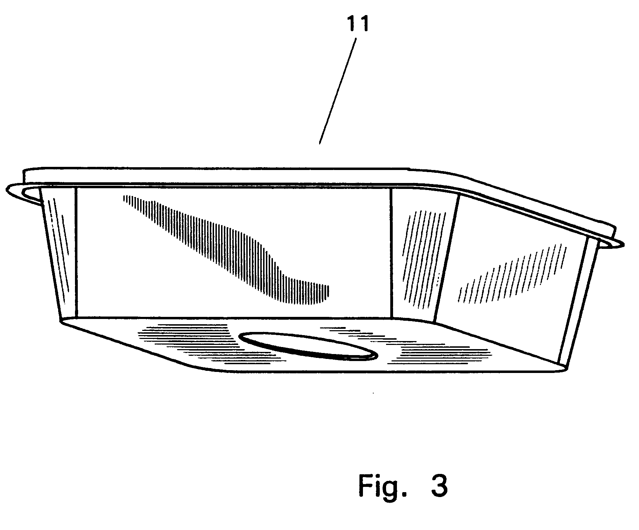

In Fig.3 ist ein fertiges becherförmiges Gefäß 11 dargestellt, das auf seiner Außenseite mit einem Etikett versehen ist.

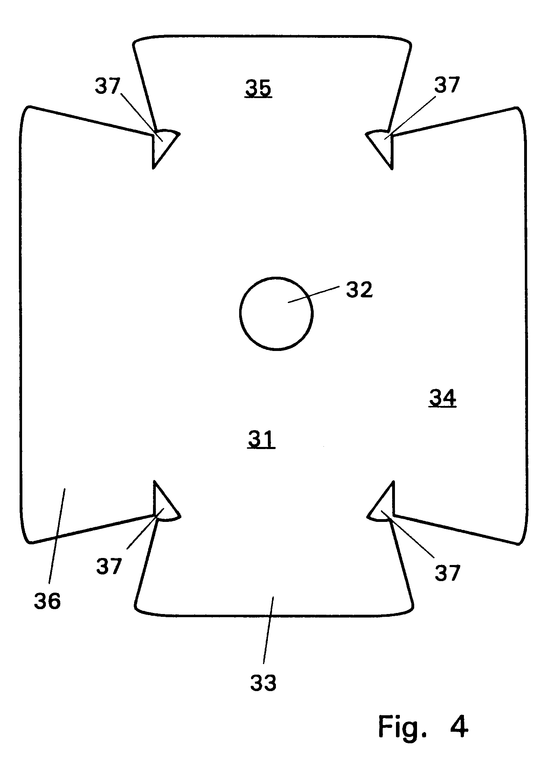

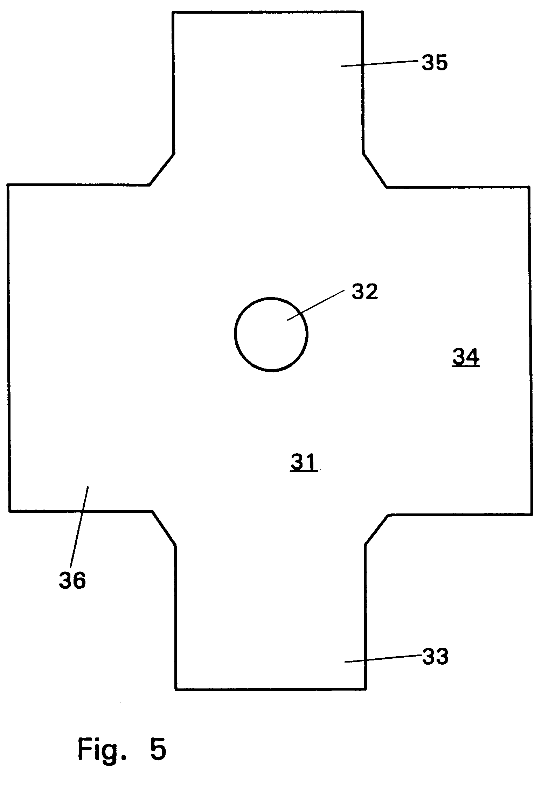

Die verwendeten Etiketten können ansich beliebige Formen aufweisen, als besonders günstig haben sich jedoch die beiden in den Figuren 4 und 5 dargestellten Formen erwiesen.

Beim Ausführungsbeispiel nach Fig.4 ist ein Bodenabschnitt 31 mit einer zentralen Öffnung 32 versehen. Um diesen Bodenabschnitt 31 sind vier Seitenwandabschnitte 33,34,35,36 angeordnet, die sich beim Hochbiegen mit ihren Seitenrändern teilweise überlappen und dort eine geschlossene Fläche bilden. Zwischen diesen Seitenwandabschnitten sind im Bereich des Bodenabschnittes Ausschnitte 37 vorgesehen, die ein einwandfreies Hochfalten im Formnest und den Austritt von eingeschlossener Luft ermöglichen.

Anstelle dieser Ausschnitte ist es auch möglich, Perforationen vorzusehen, durch welche Luft entweichen kann.

Beim Ausführungsbeispiel nach Fig.5 sind solche Ausschnitte nicht vorgesehen, dafür sind dort die am Bodenabschnitt 31 angeformten Seitenwandabschnitte 33,34,35,36 schmäler ausgebildet, so daß ebenfalls ein einwandfreies Hochfalten gewährleistet ist.

## Patentansprüche

1. Verfahren zum Herstellen eines im Tiefziehverfahren erzeugten Kunststoffgefäßes(11), mit einem Boden und Seitenwänden, von denen wenigstens die Seitenwände mit einem Aufdruck versehen werden sollen, wozu ein bedruckter Materialzuschnitt, wie z.B. ein Etikett, in die Tiefziehform(12,13,14) eingelegt wird, der wenigstens die Seitenwände des Kunststoffgefäßes(11) bedeckt, wobei der vor dem eigentlichen Tiefziehvorgang in die Form eingelegte Materialzuschnitt (Etikett) aus einem Kunststoff hergestellt ist, welcher beim Tiefziehen des Kunststoffgefäßes selbst eine innige Verbindung mit der Außenseite des Gefäßes(11) eingeht, **dadurch gekennzeichnet**, daß der Materialzuschnitt (Etikett) aus dem gleichen Grundmaterial wie das Kunststoffgefäß hergestellt und daher zusammen mit diesem wiederverwertbar ist.

2. Verfahren nach Anspruch 1, **dadurch gekennzeichnet**, daß die Kunststoffolie(10) von einer Rolle(1) abgezogen und einer Vorheizstation(2) zugeführt wird, worauf die Kunststoffolie in die eigentliche Formstation(4) einläuft, in welcher Formnester(12) vorgesehen sind, in welche die das jeweilige Etikett bildenden Materialzuschnitte vor dem Tiefziehen der Kunststoffolie(10) eingelegt werden.

3. Kunststoffgefäß(11) mit einem Boden und Seitenwänden, das im Tiefziehverfahren aus einer Kunststoffolie(10) hergestellt ist und bei dem wenigstens die Seitenwände mit einem Druckbild versehen sind, wozu wenigstens die Seitenwände des Gefäßes(11) auf ihrer Außenseite mit einem Materialzuschnitt versehen sind, der beim Tiefziehen des Gefäßes mit dessen Außenseiten selbsttätig eine innige Verbindung eingeht, **dadurch gekennzeichnet**, daß der Materialzuschnitt (Etikett) an seiner Außenseite oder an seiner Innenseite ein Druckbild aufweist, und daß der Materialzuschnitt aus dem gleichen Grundmaterial hergestellt ist wie das Kunststoffgefäß(11).

4. Kunststoffgefäß nach Anspruch 3, **dadurch gekennzeichnet**, daß der Materialzuschnitt (Etikett) aus einem Bodenabschnitt(31) und daran angeformten Wandabschnitten(33,34,35,36) besteht, zwischen denen beim Hochfalten in der Tiefziehform wenigstens geringfügige Öffnungen verbleiben.

## Claims

1. Process for the production of a plastic container (11) by the thermoforming process, with a base and side panels, at least the side panels of which are to be provided with a print motif, for which purpose a printed material blank such as a label is fed into a cavity of the thermoforming mould (12, 13, 14) that covers at least the side panels of the plastic container (11), the material blank (label) that is fed into the mould cavity before the actual thermoforming operation takes place being produced from a plastic which forms an intimate bond with the outside of the plastic container (11) when the container itself is thermoformed, **wherein** the material blank (label) is produced from the same basic material as the plastic container and can therefore be recycled together with it.

2. Process according to claim 1, **wherein** the plastic film (10) is pulled off a reel (1) and is fed into a preliminary heating station (2), alter which the plastic film is fed into the main forming station (4), in which mould cavities (12) are provided into which the material blanks that will be forming the individual labels are fed before the plastic film (10) is thermoformed.

3. Plastic container (11) with a base and side panels which is produced from a plastic film (10) by the thermoforming process and in which at least the side panels are provided with a print motif, to enable which a material blank is applied to the outside of at least the side panels of the container (11) and automatically forms an intimate bond with the outsides of the container when the latter is thermoformed, **wherein** the material blank (label) has a print motif
on its outside or inside surface and **wherein** the material blank is produced from the same basic material as the plastic container (11).

4. Plastic container according to claim 3, **wherein** the material blank (label) consists of a base section (31) that is provided with wall sections (33, 34, 35, 36), between which there are still at least small openings when these wall sections have been folded upwards in the thermoforming mould.

## Revendications

1. Procédé de fabrication d'un récipient en matière plastique (11) réalisé par emboutissage, pourvu d'un fond et de parois latérales et dont au moins les parois latérales doivent être pourvues d'une impression, une découpe de matériau imprimée, par exemple une étiquette, étant à cet effet mise en place dans le moule d'emboutissage (12, 13, 14) et recouvrant au moins les parois latérales du récipient en matière plastique (11), et la découpe de matériau (étiquette) mise en place dans le moule avant l'opération d'emboutissage proprement dite étant réalisée dans une matière plastique qui, lors de l'emboutissage du récipient proprement dit en matière plastique, entre en liaison intime avec le côté extérieur du récipient (11), **caractérisé** en ce que la découpe de matériau (étiquette) est réalisée dans le même matériau de base que le récipient en matière plastique et peut donc être recyclée conjointement avec ce dernier.

2. Procédé selon la revendication 1, **caractérisé** en ce que la feuille de matière plastique (10) est dévidée d'une bobine (1) et amenée à un poste de préchauffage (2), à la suite de quoi la feuille de matière plastique (10) entre dans le poste de formage (4) proprement dit, dans lequel sont prévues des cavités de moule (12) dans lesquelles les découpes de matériau constituant l'étiquette respective sont mises en place avant l'emboutissage de la feuille de matière plastique (10).

3. Récipient en matière plastique (11) pourvu d'un fond et de parois latérales, qui est réalisé par emboutissage à partir d'une feuille de matière plastique (10) et selon lequel au moins les parois latérales sont pourvues d'une impression, au moins les parois latérales du récipient (11) étant à cet effet pourvues sur leur côté extérieur d'une découpe de matériau qui, lors de l'emboutissage du récipient, entre automatiquement en liaison intime avec les côtés extérieurs de ce dernier, **caractérisé** en ce que la découpe de matériau (étiquette) présente une impression sur son côté extérieur ou sur son côté intérieur, et en ce que la découpe de matériau est réalisée dans le même matériau de base que le récipient en matière plastique (11).

4. Récipient en matière plastique selon la revendication 3, **caractérisé** en ce que la découpe de matériau (étiquette) est constituée d'une partie de fond (31) et de parties de parois (33, 34, 35, 36) formées sur cette partie de fond, entre lesquelles restent au moins d'infimes ouvertures lors du relevage dans le moule d'emboutissage.
